# EUROPEAN PATENT APPLICATION

(11) **EP 4 847 243 A1**
(43) Date of publication of application: **02.12.2026**
(21) Application number: 25179798.1
(22) Date of filing: 30.05.2025
(51) Int. Cl.: B32B 7/12, B32B 27/08, B32B 27/30, B32B 27/32, C08L 23/26

(54) **A MULTILAYER ORIENTED FILM HAVING IMPROVED BARRIER PROPERTIES**

(71) Applicant: Borealis GmbH, 1020 Vienna (AT)
(72) Inventor: WANG, Jingbo, 1020 Wien (AT); SEMAAN, Chantal, 1020 Wien (AT)
(74) Representative: TBK

(57) **Abstract**

The present invention relates to a multilayer oriented polyethylene film having improved barrier properties and to a packaging comprising the film. The oriented polyethylene film comprises at least a skin layer comprising a specific High-Density Polyethylene (HDPE), a tie layer comprising a polar-modified polyolefin, and a barrier layer comprising a blend of an EthyleneVinyl alcohol Copolymer (EVOH) and a polyvinyl alcohol (PVA) with a saponification degree of 90.0% or more and 100.0% or less. The PVA content in the barrier layer is 5-45 wt.-%.

## Description

### Field of the invention

The present invention relates to an oriented film having multiple layers (multilayer oriented film) and in particular to a multilayer oriented polyethylene film having improved gas barrier properties. The present invention furthermore relates to a method for producing the multilayer oriented polyethylene film, and to a packaging comprising the multilayer oriented polyethylene film.

### Technical background

Oriented films have been widely used in the field of packaging. In particular, multilayer oriented films having a gas barrier layer and a skin layer for protecting the barrier layer are used for packaging sensitive goods such as food and beverages.

For example, KR 2010-0113231 A discloses a multilayer barrier film comprising a first polymer film having low permeability to moisture and a heterogeneous polymer blend film comprising a porous polymer carrying a plasticizer in its porous structure.

KR 2006-0099887 A discloses an ethylene-vinyl alcohol copolymer (EVOH) composition for improved processability and comprising EVOH, polyvinyl alcohol (PVA) and a plasticizer. The composition may be co-extruded and formed into a biaxially stretched film.

WO 99/54400 A1 discloses a composition for forming a material having barrier properties and comprising a polyolefin, PVA, antioxidant and a compatibilizer. The composition may be used as a cast or extruded film.

US 5084352 A discloses a multilayer barrier film products comprising a first polymer film having low permeability to moisture and a heterogeneous polymer blend film containing a gas barrier polymer and a polymer the same as or compatible with said first polymer film and distributed within said gas barrier polymer.

JP H08-259802 A discloses a gas barrier resin composition comprising EVOH and a polyalcohol obtained by reducing a polyketone comprising a carbon monoxide-ethylene copolymer.

Machine direction oriented films, which are often also referred to as mono-directionally oriented films (MDO-films), are also well known in the industry. While monoaxial stretching may improve stiffness and impact behaviour it may similarly deteriorate the mechanical properties in transverse direction due to the distinct orientation of the polymer chains in the direction of the stretching, resulting in films with non-isotropic behaviour when comparing machine direction (MD) with transversal direction (TD) properties. Oriented (stretched) multilayer barrier films furthermore need a very good layer adhesion to each other, so as to withstand the orientation steps without any delamination between the barrier and its adjacent layers.

The barrier layer can have a deterring effect on the mechanical properties of the multilayer film. In particular ethylene-vinyl alcohol copolymer (EVOH) often has poor melt strength and can weaken the film in view of processability and stretchability. Making the barrier layer thin in order to minimize the adverse effects thereof on the other hand deteriorates the barrier properties. Similarly, employing large amounts of additives or reinforcing layers complicates recycling thereof.

In other words, there is still room for further improvement regarding gas barrier properties and recyclability of the material, thus contributing to sustainability.

### Summary of the invention

The inventors of the present invention surprisingly found that a multilayer film comprising at least a gas barrier layer, a tie layer and a skin layer in accordance with the present invention can provide good gas barrier properties even when employing a rather thin barrier layer. Thus, using the present invention it is possible to make the barrier layer thin (and thus improve recyclability) and/or to improve the gas barrier properties of the multilayer film. An aim of the present invention is to provide a multilayer film having favourable gas barrier properties while being easy to recycle. A further aim of the present invention is to provide an oriented film having sufficient layer adhesion and mechanical strength.

This can be achieved by providing an oriented polyethylene film comprising at least three layers:
A) a skin layer comprising a High-Density Polyethylene (HDPE), wherein the HDPE has the following properties:
   a density, as determined according to ISO 1183-1, of 940 kg/m³ or more and 970 kg/m³ or less,
   a MFR2, as determined according to ISO 1133 at 190°C at a load of 2.16 kg, of 0.1 g/10 min or more and 2.0 g/10 min or less, and
   a flow rate ratio (FRR) MFR21/MFR2 of 40 or more and 120 or less, the MFR21 being as determined according to ISO 1133 at 190°C and a load of 21.6 kg,
B) a tie layer comprising a polar-modified polyolefin, and
C) a barrier layer comprising a blend of an Ethylene - Vinyl alcohol Copolymer (EVOH) and a polyvinyl alcohol (PVA), wherein the PVA has a saponification degree (degree of hydrolysis) of 90.0% or more and 100.0% or less, and the PVA content in the barrier layer is 5 wt.-% or more and 45 wt.-% or less.

The specific combination of barrier layer, tie layer and skin layer of the present invention provides excellent mechanical and gas barrier properties. In particular, it has been found that employing the HDPE of the present invention is particularly suitable to protect the barrier layer while even improving the gas barrier properties thereof.

The present invention also relates to a packaging comprising the oriented polyethylene film of the present invention.

### Definitions

Where the term "comprising" is used in the present description and claims, it does not exclude other non-specified elements of major or minor functional importance. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Whenever the terms "including" or "having" or "containing" are used, these terms are meant to be equivalent to "comprising" as defined above. Where an indefinite or definite article is used when referring to a singular noun, e.g. "a", "an" or "the", this includes a plural of that noun unless something else is specifically stated.

According to this invention the terms "oriented polyethylene film", "multilayer oriented polyethylene film", and the term "multilayer oriented film", are synonyms. Sometimes, the "multilayer oriented polyethylene film" may also be abbreviated as "polyethylene film" or simply as "film".

Moreover, a "primary" film is understood to be non-oriented (non-stretched) film. The terms "primary film", "primary multilayer film", "primary multilayer polyethylene film", "non-oriented film" and such like, are synonyms in the present specification.

Term "multimodal" in context of the HDPE of the present invention means herein multimodality with respect to melt flow rate (MFR) of at least two HDPE components, i.e. the two HDPE components have different MFR values. The multimodal HDPE can have, in addition or alternatively, multimodality between two polyethylene components with respect to one or more further properties, like density, comonomer type and/or comonomer content.

When a feature or material is optional (or preferable, or may be present), this shall encompass that the respective entity (e.g. product or constituent) is provided with or without that feature/material.

Moreover, the term "xx or more and yy or less" when referring to numerical values shall be equivalent to "from xx to yy" or "xx-yy" or "in the range of from xx to yy" and shall include the upper and lower limits "xx" and "yy". Nevertheless, this term shall also refer to more limited ranges in which the upper limit is excluded ("xx or more and less than yy") or in which the lower limit is excluded ("more than xx and yy or less") or in which both the upper and the lower limit are excluded ("more than xx and less than yy").

As stated herein, a stretch ratio is the ratio between the original length of a film and the length of the (monoaxially) stretched film. The skilled person will acknowledge that this stretch ratio is similarly defined for a continuous process. For example, a stretch ratio of "3" can similarly be expressed as a stretch ratio of "3:1", where "1" represents the original length of the film and the "3" denotes that it has been stretched to 3 times that original length. Moreover, stretching shall be understood to be equivalent to "drawing". An effect of stretching (or drawing) is that the thickness of the film is similarly reduced. Thus a stretch ratio of "x" preferably also means that the thickness of the oriented film is (about) x times less than (i.e. 1/x times) the thickness of the primary film.

### Detailed description of the invention

The components of the oriented polyethylene film and the constituents of the individual layers will be described in greater detail below. It is to be understood that all embodiments (or preferred values or ranges) of individual elements of the present invention may be combined with each other to provide feature combinations without restriction, unless this would lead to a contradiction.

### Oriented polyethylene film

The oriented polyethylene film contains at least three layers, i.e. the barrier layer, the tie layer and the skin layer. The oriented polyethylene film preferably contains a tie layer on both sides of the barrier layer. Two tie layers may be the same or different from each other and at least one, preferably both comprise the polar-modified polyolefin. The skin layer of the present invention covers the barrier layer and is bonded (laminated) to the barrier layer via the tie layer. The oriented polyethylene film preferably contains two skin layers (on opposing sides of the barrier layer). The skin layers may be the same or different from each other and at least one, preferably both, of the skin layers is a skin layer comprising the HDPE as defined in the present invention. The oriented polyethylene film preferably comprises the barrier layer, at least one tie layer on each of the opposing sides of the barrier layer, and at least two skin layers.

The oriented polyethylene film of the invention may be symmetric or asymmetric. A symmetric film is one in which the layers, from the outermost layers inwards, are equal on each side of the film. For example, a symmetric film of the invention which includes five layers may comprise these disposed in the order skin layer/tie layer/barrier layer/tie layer/skin layer (i.e. "ABCBA" when using the designations of claim 1). The oriented multilayer film of the present invention may also comprise further outer layer(s) (D), such as sealing layers.

Where an outer layer is present, a preferred symmetric film of the invention comprises seven layers disposed in the order outer layer/skin layer/tie layer/barrier layer/tie layer/skin layer/outer layer (DABCBAD). The outer layer(s) is(are) preferably polyethylene layer(s) (layer(s) comprising PE), such as HDPE layer(s). When the outer layer(s) is(are) composed of PE, recycling of the oriented film is facilitated.

In the present invention, symmetric films are preferred due to their ease of manufacturing and equal properties from both sides. In particular, it is preferred that each type of layer (barrier (C), skin (A), tie (B) and outer (D)) in the film is the same. However, asymmetric films may be preferred for some applications. Examples of asymmetric films include the three-layer film having the structure comprising film layers as defined above and a four layer film having layers disposed in the order outer layer/skin layer/tie layer/barrier layer (DABC). Particularly preferred asymmetric films have a layer order of DBABC in which the outer layer (D) may preferably act as a sealing layer (e.g. a heat-seal layer). Preferred outer layers, in particular sealing layers, have a density in the range of 920 kg/m³ or more and 941 kg/m³ or less, such as 925 kg/m³ or more and 939 kg/m³ or less.

Films may include more than one of each of the layers defined in claim 1, provided that the multilayer polymer film always comprises at least one structure of layers A, B and C in the order ABC.

It is further envisaged that the oriented multilayer film of the present invention can be produced by blocking two asymmetric films to form a film comprising the following structure:
[ABCB(blocking layer) + (blocking layer)BCBA] or [DABCBA(blocking layer)+(blocking layer)ABCBAD].

Alternatively, the oriented barrier films of the present invention may consist of any of the following layers: ABCBA or ABCBD or DABCBAD or ABCBCBA or DABCBCBAD as well as [ABCB(blocking layer) + (blocking layer)BCBA] or [DABCBA(blocking layer) + (blocking layer)ABCBAD]. When employing multilayer films that are blocked together, it is preferable to employ two non-oriented (primary) films that are blocked together after extrusion, so the stretching is done on the blocked film.

The skilled person is aware of suitable materials to form the blocking layers: such blocking layers can be ethylene copolymer component having a melting point (Tm; ISO 11357) of 100°C or less, e.g. a melting point of 80 to 95°C. Preferred materials for such blocking layers are ethylene alkyl acrylate polymer (e.g. an ethylene C1 -10 alkyl acrylate polymer). Preferred ethylene alkyl acrylate polymers are ethylene methyl acrylate (EMA), ethylene ethyl acrylate and ethylene butyl acrylate, especially EMA. The acrylate content of the ethylene acrylate copolymer may be in the range 1 to 40 wt.-%, preferably 2 to 30 wt.-%, more preferably 3 to 28 wt.-%, especially 5 to 25 wt.-%. The ethylene acrylate copolymers are very well known and commercially available (e.g. from DuPont).

The oriented polyethylene film is preferably a stretched film. The oriented polyethylene film is more preferably a monoaxially stretched film, even more preferably monoaxially stretched in machine direction. When the film is a monoaxially stretched film, the stretch ratio is preferably 3.0 or more and 9.0 or less, more preferably 3.5 or more and 7.5 or less, 3.9 or more and 6.5 or less, or 4.3 or more and 5.9 or less.

The total thickness of the oriented polyethylene film may be 10 µm or more and 35 µm or less, preferably 11 µm or more and 30 µm or less, 12 µm or more and 28 µm or less, 13 µm or more and 26 µm or less, or 15 µm or more and 25 µm or less.

The oriented polyethylene film may have an Oxygen Transmission Rate (OTR) as measured on a film having a thickness of 25 µm in accordance with ISO15105-1 at 23°C and 0% RH, of less than 1.00 cm³/m²/day/atm, preferably 0.03 cm³/m²/day/atm or more and 0.95 cm³/m²/day/atm or less, 0.05 cm³/m²/day/atm or more and 0.90 cm³/m²/day/atm or less, 0.07 cm³/m²/day/atm or more and 0.85 cm³/m²/day/atm or less, 0.09 cm³/m²/day/atm or more and 0.80 cm³/m²/day/atm or less, or 0.10 cm³/m²/day/atm or more and 0.70 cm³/m²/day/atm or less.

The oriented polyethylene film is preferably a transparent film.

The oriented polyethylene film preferably contains polyethylene in an amount of 40.0 wt.-% or more and 98.0 wt.-% or less, more preferably 50.0 wt.-% or more and 96.0 wt.-% or less, 60.0 wt.-% or more and 94.0 wt.-% or less, 65.0 wt.-% or more and 92.0 wt.-% or less, or 70.0 wt.-% or more and 90.0 wt.-% or less, relative to the total weight of the oriented polyethylene film.

The barrier layer, the tie layer and the skin layer are preferably laminated to each other, more preferably by co-extrusion. Preferably all layers of the oriented polyethylene film are laminated to each other, more preferably by co-extrusion. Particularly preferably, the barrier layer is adjacent (directly laminated) to the tie layer (at least one tie layer) and the tie layer is adjacent to both the barrier layer and the skin layer.

### Skin layer

The skin layer comprises the High-Density Polyethylene (HDPE) having a density, as determined according to ISO 1183-1, of 940 kg/m³ or more and 970 kg/m³ or less, a MFR2, as determined according to ISO 1133 at 190°C at a load of 2.16 kg, of 0.1 g/10 min or more and 2.0 g/10 min or less, and a flow rate ratio (FRR) MFR21/MFR2 of 40 or more and 120 or less. The MFR21 is as determined according to ISO 1133 at 190°C and a load of 21.6 kg.

The HDPE may be any HDPE having the properties recited above.

The HDPE preferably has a density of 943 kg/m³ or more and 967 kg/m³ or less, more preferably 946 kg/m³ or more and 964 kg/m³ or less, 949 kg/m³ or more and 961 kg/m³ or less, or 951 kg/m³ or more and 960 kg/m³ or less.

The HDPE may have a MFR2 of 0.2 g/10 min or more and 1.8 g/10 min or less, preferably 0.3 g/10 min or more and 1.6 g/10 min or less, 0.4 g/10 min or more and 1.5 g/10 min or less, 0.5 g/10 min or more and 1.4 g/10 min or less, or 0.55 g/10 min or more and 1.3 g/10 min or less.

The HDPE may have a melt flow ratio (FRR = MFR21/MFR2) of 40 or more and 115 or less, preferably 40 or more and 85 or less, 40 or more and 75 or less, 45 or more and 70 or less, or 50 or more and 65 or less.

The skin layer preferably comprises the HDPE in an amount of 70 wt.-% or more and 100 wt.-% or less, more preferably 80 wt.-% or more and 100 wt.-% or less, 90 wt.-% or more and 100 wt.-% or less, or 95 wt.-% or more and 100 wt.-% or less. The oriented polyethylene film preferably comprises polyethylene, preferably HDPE, in an amount of 40.0 wt.-% or more and 98.0 wt.-% or less, more preferably 50.0 wt.-% or more and 96.0 wt.-% or less, 60.0 wt.-% or more and 94.0 wt.-% or less, 65.0 wt.-% or more and 92.0 wt.-% or less, or 70.0 wt.-% or more and 90.0 wt.-% or less, relative to the total weight of the oriented polyethylene film. A film having a high share of polyethylene can be recycled more easily since less (or no) separation of components is required.

The HDPE may be a multimodal HDPE containing at least a first component and a second component, wherein the first component has a higher MFR (MFR2) than the second component. The multimodal HDPE is preferably an in-reactor blend of at least the first and second component. The first component of the in-reactor blend is preferably the first-produced component, more preferably produced in a loop reactor, while the second component is preferably the second-produced component, more preferably produced in a gas phase reactor (GPR). The multimodal HDPE may contain additional polymer components.

The HDPE may for example be a Ziegler-Natta catalysed (ZN catalysed) HDPE which is an in-reactor blend. The in-reactor blend may be produced by polymerizing a first polymer component / first polymer fraction (P1) in a loop reactor and then forwarding the first polymer component to a gas phase reactor for forming a second polymer component / second polymer fraction (P2).

The HDPE may be produced in a multistage process wherein at least two components P1 and P2 are produced in subsequent stages. In such a case, the properties of the components produced in the second step (or further steps) of the multistage process can either be inferred from polymers which are separately produced in a single stage by applying identical polymerization conditions (e.g. identical temperature, partial pressures of the reactants/diluents, suspension medium, reaction time) with regard to the stage of the multistage process in which the component is produced, and by using a catalyst on which no previously produced polymer is present. Alternatively, the properties of the components produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13. Thus, although not directly measurable on the multistage process products, the properties of the components produced in higher stages of such a multistage process can be determined by applying either or both of the above methods. The skilled person will be able to select the appropriate method.

High density polyethylenes produced in a multistage process are also designated as "in-situ" blends or in-reactor blends. The resulting end product is an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture.

In a preferred embodiment, the first polymer component (P1) has an MFR2 of 50 to 600 g/10min, preferably from 150 to 500 g/10 min, more preferably from 250 to 400 g/10 min, determined according to ISO 1133 at a temperature of 190°C and a load of 2.16 kg. In a preferred embodiment, the first polymer component (P1) has a density of 955 to 980 kg/m³, preferably from 960 to 975 kg/m³, more preferably from 965 to 972, determined according to ISO 1183. In a preferred embodiment, the first polymer component (P1) can be an ethylene homopolymer or copolymer. Preferably, component (P1) is an ethylene homopolymer. In a preferred embodiment, the second polymer component (P2) has a melt flow rate MFR2 of from 0.00001 to 1.0 g/10 min, preferably from 0.0001 to 0.5 g/10 min, more preferably from 0.0005 to 0.1 g/10 min, determined according to ISO 1133 at a temperature of 190°C and a load of 2.16 kg. In a preferred embodiment, the second polymer component (P2) has a density of 925 to 970 kg/m³, preferably from 930 to 960 kg/m³, more preferably from 935 to 950 kg/m³, determined according to ISO 1183. In a preferred embodiment, the second polymer component (P2) can be an ethylene homopolymer or copolymer. The second polymer component (P2) is preferably a copolymer. Preferred ethylene copolymers employ alpha-olefins (e.g. C3-12 alpha-olefins, preferably C4-C8 alpha-olefins) as comonomers. Examples of suitable alpha-olefins include 1-butene, 1-hexene and 1-octene. 1-butene is an especially preferred comonomer.

The multimodal high density polyethylene may be produced by polymerization using conditions which create a multimodal (e.g. bimodal) polymer product ideally using a Ziegler Natta catalyst system. Typically, a two or more stage, i.e. multistage, polymerization process is used with different process conditions in the different stages or zones (e.g. different temperatures, pressures, polymerization media, hydrogen partial pressures, etc). Preferably, the multimodal (e.g. bimodal) composition is produced by a multistage polymerization, e.g. using a series of reactors, with optional comonomer addition preferably in only the reactor(s) used for production of the higher/highest molecular weight component(s). A multistage process is defined to be a polymerization process in which a polymer comprising two or more components is produced by producing each or at least two polymer component(s) in a separate reaction stage, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, batch reactors etc. (see for example WO97/44371 and WO96/18662).

The total skin layer thickness may for example be 50.0% or more and 98.0% or less of the total thickness of the oriented polyethylene film, preferably 60.0% or more and 94.0% or less, 65.0% or more and 92.0% or less, 68.0% or more and 92.0% or less, 70.0% or more and 90.5% or less, or 72.0% or more and 89.0% or less. The total skin layer thickness refers to the total thickness of all skin layers. It is the thickness of the skin layer when only one skin layer is present and it is the summed skin layer thickness when two skin layers are present.

The skin layer (or each skin layer) may be formed of two or more sub-layers having the same or a similar composition. For example, a skin layer may be formed of two sub-layers having the same composition by co-extrusion so as to facilitate extrusion of all layers of the composition with comparable thickness per extrusion channel. The skin layers may also have different compositions e.g. to produce a (slight) gradient in the composition which may be helpful for improving bonding of the skin layer to the tie layer and/or to another material. When a skin layer is formed from two or more sub-layers, the properties of the "skin layer" shall refer to the total skin layer, i.e. the sum of all directly adjacent sub-layers (i.e. total thickness, average composition and so forth).

The HDPE forming the skin layer may comprise (or consist of) a multimodal copolymer of ethylene and at least one comonomer selected from C4-10 alpha-olefin. The comonomers may especially be selected from 1 -butene, 1 -hexene or 1 -octene, wherein 1 -butene is especially preferred. Ideally the multimodal copolymer contains 1 comonomer only. The HDPE can also comprise a multimodal copolymer of ethylene and at least two different comonomers selected from C4-10 alpha-olefin.

The expression multimodal copolymer of ethylene covers in this invention ethylene copolymers with one or more comonomers. Within this invention such a multimodal copolymer of ethylene and at least two different comonomers selected from C4-10 alpha-olefin may be expressed as "multimodal terpolymer" or "multimodal ethylene terpolymer". Ideally, the multimodal polyethylene terpolymer contains exactly 2 comonomers. The comonomers are especially selected from 1 -butene, 1 -hexene or 1 -octene, wherein a combination of 1-butene and 1-hexene as comonomers is especially preferred.

The amount of comonomers present in the multimodal copolymer is preferably in the range of 0 to 12.0 mol%, such as 0.05 to 12.0 mol%, 0.07 to 10.0 mol%, especially 0.08 to 8.0 mol%, 0.09 to 6.0 mol%, 0.10 to 4.0 mol%, 0.10 to 2.0 mol%, or 0.10 to 1.0 mol%, regardless of the number of comonomers present.

A multimodal copolymer is multimodal, such as bimodal. For example, its molecular weight profile does not comprise a single peak but instead comprises the combination of two or more peaks (which may or may not be distinguishable) centred about different average molecular weights as a result of the fact that the polymer comprises two separately produced components. Alternatively, the multimodal copolymer of the present invention can be multimodal in view of its comonomer content or in view of its comonomer quality. It is especially envisaged that the multimodal copolymer can be multimodal, such as bimodal in various aspects, such as in view of both molecular weight and comonomer distribution. Multimodal polyethylene copolymers are typically made in more than one reactor, each having different conditions. The components of the multimodal copolymer are typically so different that they show more than one peak or shoulder in the diagram given as result of its GPC (gel permeation chromatograph) curve, where d(log(MW)) is plotted as ordinate vs log(MW), where MW is molecular weight.

The multimodal copolymer can comprise a lower molecular weight component/fraction being a polyethylene homo-or copolymer and a higher molecular weight component/fraction being a copolymer of ethylene and at least one, preferably exactly one, alpha olefin comonomer having 4 - 10 carbon atoms.

In case both the lower and the higher molecular weight fraction are copolymers, the comonomers in both fractions may be identical in view of their quality, but may still differ in their respective amount.

The comonomers are especially selected from 1-butene, 1-hexene or 1-octene, wherein 1-butene is especially preferred. In case the multimodal copolymer is a multimodal terpolymer, it can comprise a lower molecular weight fraction being an ethylene homopolymer and a higher molecular weight fraction being a terpolymer of ethylene and at least two alpha olefin comonomers having 4 - 10 carbon atoms. Alternatively, the multimodal polyethylene terpolymer can preferably comprise
(i) a lower molecular weight homopolymer of ethylene; and a higher molecular weight terpolymer of ethylene, 1-butene and a C6-C10-alpha-olefin such as 1-hexene; or
(ii) a lower molecular weight copolymer of ethylene and 1-butene; and a higher molecular weight copolymer of ethylene and one C6-C10-alpha-olefin such as 1-hexene; or
(iii) a lower molecular weight copolymer of ethylene and a C6-C10-alpha olefin; and a higher molecular weight terpolymer of ethylene, 1-butene and a C6-C10-alpha olefin, such as 1-hexene.

More preferably the multimodal polyethylene terpolymer comprises a lower molecular weight homopolymer of ethylene and a higher molecular weight terpolymer of ethylene, 1-butene and 1-hexene, as identified in (i) above.

The multimodal polyethylene co-polymers may be produced by polymerisation using conditions which create a multimodal (e.g. bimodal) polymer product, preferably using a Ziegler Natta catalyst system. Typically, a two or more stage, i.e. multistage, polymerisation process is used with different process conditions in the different stages or zones (e.g. different temperatures, pressures, polymerisation media, hydrogen partial pressures, etc). Preferably, the multimodal (e.g. bimodal) co-polymers are produced by a multistage polymerisation, e.g. using a series of reactors, with optional comonomer addition preferably in only the reactor(s) used for production of the higher/highest molecular weight component(s). A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO 97/44371 and WO 96/18662).

The lower molecular weight component preferably forms from 30 to 70 wt.-%, e.g. 40 to 60 wt.-% by weight of the multimodal co-polymer with the higher molecular weight component forming 70 to 30 wt.-%, e.g. 40 to 60 wt.-%. The higher molecular weight component of the multimodal polyethylene co-polymer has a lower MFR2 and a lower density than the lower molecular weight component.

### Tie layer

The tie layer comprises a polar-modified polyolefin. The polar-modified polyolefin shows good adhesion to both the skin layer and the barrier layer.

The tie layer (B) of the invention is positioned in between the barrier layer (C) and the skin layer (A). The tie layer has the appropriate properties to allow it to adhere both to the barrier layer and also to the skin layer.

Preferably, the tie layer contains 90 wt.-% or more and 100 wt.-% or less of the polar-modified polyolefin such as 95 wt.-% or more and 100 wt.-% or less, or 98 wt.-% or more and 100 wt.-% or less. In an embodiment, the tie layer consists essentially of (e.g. consists of) polar-modified polyolefin. The tie layer may comprise additives, usually in an amount of 0% or more and 10 wt.-% or less, such as 0.2 wt.-% or more and 5 wt.-% or less, or 0.5 wt.-% or more and 2 wt.-% or less.

The polar-modified polyolefin may have a melting point (melting temperature), as determined according to ISO 11357, of 100°C or more and 145°C or less, preferably 105°C or more and 140°C or less, 110°C or more and 135°C or less, or 115°C or more and 130°C or less.

The polar-modified polyolefin may have a density, as determined according to ISO 1183-1, of 870 kg/m³ or more and 970 kg/m³ or less, preferably 890 kg/m³ or more and 960 kg/m³ or less, 900 kg/m³ or more and 955 kg/m³ or less, 910 kg/m³or more and 950 kg/m³ or less, 912 kg/m³ or more and 945 kg/m³ or less, 914 kg/m³ or more and 940 kg/m³ or less, or of 916 kg/m³ or more and 930 kg/m³ or less.

The polar-modified polyolefin may be a polar-modified polyethylene, a polar-modified polypropylene, a polar-modified ethylene-propylene copolymer, a polar-modified ethylene-1-butene copolymer or the like. In particular, however, the polar-modified polyolefin component may be a polar-modified LLDPE or HDPE, especially a polar-modified LLDPE. The poly-modified polyolefin may be a graft polymer. In the graft polymers, a polar group may be introduced by grafting. For example, an α,β-unsaturated carboxylic acid or derivative thereof, such as acrylic acid, methacrylic acid, ethacrylic acid, maleic acid, fumaric acid, an anhydride thereof (especially maleic anhydride), an ester thereof, may be grafted on a non-polar-modified polyolefin. The grafted α,β-unsaturated carboxylic acid or derivative thereof may for example be present in the polar-modified polyolefin at a level of 0.01 to 25 wt.-%, preferably 0.05 to 1.5 wt.-%. Most preferably, the graft polymer is formed by the grafting of maleic anhydride onto polyethylene, preferably LLDPE.

Methods for performing copolymerisation and graft-polymerization are known in the art and suitable polymers are available via these methods and from commercial sources. One preferred polar-modified polyolefin is polyethylene having grafted thereon maleic anhydride groups. Especially preferred polar-modified polyolefins are produced by Mitsui Chemicals Europe under the tradename Admer, especially Admer AT2235.

Preferably, the polar-modified polyolefin is at least one selected from the group consisting of an acid-modified polyolefin and an anhydride-modified polyolefin, more preferably at least one selected from the group consisting of maleic anhydride graft modified polyethylene, maleic anhydride graft modified polypropylene, maleic anhydride graft modified ethylene-ethyl acrylate copolymer, maleic anhydride graft modified ethylene-vinyl acetate copolymer, even more preferably at least a maleic anhydride modified polyethylene.

The polar-modified polyolefin may have a MRF₂, as determined according to ISO 1133 at 190°C at a load of 2.16 kg, of 0.5 g/10 min or more and 4.0 g/10 min or less, preferably 0.8 g/10 min or more and 3.8 g/10 min or less, 1.1 g/10 min or more and 3.6 g/10 min or less, 1.4 g/10 min or more and 3.4 g/10 min or less, or of 1.6 g/10 min or more and 3.2 g/10 min or less.

The thickness of the tie layer (or of each tie layer, when multiple are present) may be 0.5% or more and 15.0% or less of the total thickness of the oriented polyethylene film, preferably 1.0% or more and 14.0% or less, 1.5% or more and 13.5% or less, 2.5% or more and 13.0% or less, 3.5% or more and 12.0% or less, or 4.0% or more and 11.0% or less. Preferably the thickness of the tie layer (or of each tie layer, when multiple are present) is the same or lower, more preferably lower, than the thickness of the barrier layer. The total thickness of all tie layers in the oriented polyethylene film is preferably 0.5% or more and 32.0% or less of the total thickness of the oriented polyethylene film, more preferably 2.0% or more and 30.0% or less, 3.0% or more and 28.0% or less, 4.0% or more and 28.0% or less, 5.0% or more and 26.0% or less, or 6.0% or more and 24.0% or less.

### Barrier layer

The barrier layer of the present invention comprises a blend of an Ethylene - Vinyl alcohol Copolymer (EVOH) and a polyvinyl alcohol (PVA).

The PVA has a saponification degree of 90.0% or more and 100.0% or less and the PVA content in the barrier layer is 5 wt.-% or more and 45 wt.-% or less. Containing such a PVA in the barrier layer can provide good adhesion to the tie layer, favourable transparency and excellent barrier properties when combined with the skin layer and the tie layer of the present invention.

The PVA may have a saponification degree of 90.5% or more and 100.0% or less, preferably 91.0% or more and 99.9% or less, 92.0% or more and 99.8% or less, 93.0% or more and 99.7% or less, 94.0% or more and 99.6% or less, 95.5% or more and 99.5% or less, or 97.0% or more and 99.4% or less.

The PVA content in the barrier layer may be 8.0 wt.-% or more and 45.0 wt.-% or less, preferably 10.0 wt.-% or more and 42.0 wt.-% or less, 15.0 wt.-% or more and 40.0 wt.-% or less, 20.0 wt.-% or more and 38.0 wt.-% or less, or 25.0 wt.-% or more and 36.0 wt.-% or less.

The PVA may have a viscosity, as determined according to JIS K 6726, of 2.0 mPa·s or more and 130.0 mPa·s or less, preferably 2.5 mPa·s or more and 100.0 mPa·s or less, 3.0 mPa·s or more and 60.0 mPa·s or less, 3.5 mPa·s or more and 40.0 mPa·s or less, or 4.0 mPa·s or more and 35.0 mPa·s or less.

The polymer blend of the barrier layer (the blend of PVA, EVOH and optional additives) may have a melting point (Tm), as determined according to ISO 11357, of 145°C or more and 185°C or less, preferably 150°C or more and 180°C or less, 155°C or more and 175°C or less, or 160°C or more and 170°C or less.

The polymer blend of the barrier layer may have a crystallisation temperature (Tc), as determined according to ISO 11357, of 115°C or more and 165°C or less, preferably 120°C or more and 160°C or less, 125°C or more and 158°C or less, or 130°C or more and 154°C or less.

The polymer blend of the barrier layer may have a MFR2, as determined according to ISO 1133 at 190°C at a load of 2.16 kg, of 0.02 g/10 min or more and 1.5 g/10 min or less, preferably 0.03 g/10 min or more and 1.3 g/10 min or less, 0.04 g/10 min or more and 1.1 g/10 min or less, 0.05 g/10 min or more and 0.9 g/10 min or less, or 0.06 g/10 min or more and 0.7 g/10 min or less.

The sum of the content of the EVOH and of the PVA in the barrier layer may be 90.0 wt.-% or more and 100 wt.-% or less, preferably 92.0 wt.-% or more and 100 wt.-% or less, 93.0 wt.-% or more and 100.0 wt.-% or less, 94.0 wt.-% or more and 100 wt.-% or less, 95.0 wt.-% or more and 100 wt.-% or less, 96.0 wt.-% or more and 100 wt.-% or less, 97.0 wt.-% or more and 100 wt.-% or less, 98.0 wt.-% or more and 100 wt.-% or less, 98.5 wt.-% or more and 100 wt.-% or less, 99.0 wt.-% or more and 100 wt.-% or less, or 99.2 wt.-% or more and 99.5 wt.-% or less. The barrier layer may further comprise additive(s). The content of additive(s) (total amount) in the barrier layer may be 0 or more and 5.0 wt.-% or less, preferably 0.5 wt.-% or more and 5.0 wt.-% or less, 0.7 wt.-% or more and 4.5 wt.-% or less, 0.9 wt.-% or more and 4.0 wt.-% or less, 1.1 wt.-% or more and 3.5 wt.-% or less, or 1.3 wt.-% or more and 3.0 wt.-% or less.

In an embodiment, the barrier layer consists of a blend of EVOH, PVA and optional additive(s). Additives may for example be (inorganic) fillers and/or (inorganic) reinforcing agent(s). In an embodiment, it is preferable that EVOH and PVA are the only organic polymer components of the barrier layer. The summed content of the EVOH, the PVA and the additive(s) in the barrier layer may be 96.0 wt.-% or more and 100 wt.-% or less, preferably 97.0 wt.-% or more and 100 wt.-% or less, 98.0 wt.-% or more and 100 wt.-% or less, 99.0 wt.-% or more and 100 wt.-% or less, 99.5 wt.-% or more and 100 wt.-% or less, or the barrier layer consists essentially of the PVA, the EVOH and the additive(s).

Examples of EVOH include copolymers having an ethylene content of 10 mol% or more and 50 mol% or less, preferably 15 mol% or more and 45 mol% or less, 20 mol% or more and 40 mol% or less, or 25 mol% or more and 35 mol% or less.

The properties of EVOH-grades depend on the ethylene content. EVOH-grades with lower ethylene content show better barrier behaviour, but are more difficult in processing behaviour (especially during the production of a rather thick, non-oriented primary film) and are usually more expensive than EVOH-grades with higher ethylene content.

The barrier layer preferably contains only barrier polymers. Thus, it is preferable that the barrier layer "consists essentially of" barrier polymer components. The term consists essentially of is used herein to exclude the presence of another polymer component. It will be appreciated that polymers are often admixed with known additives described in detail below. The term consists essentially of allows for the presence of such standard additives (possibly added via a masterbatch) but excludes the presence of another polymer component. Ideally, the barrier layer consists essentially of the EVOH only.

The total thickness of the barrier layer may be 1.0% or more and 15.0% or less of the total thickness of the oriented polyethylene film, preferably 2.0% or more and 14.0% or less, 3.0% or more and 13.5% or less, 4.0% or more and 13.0% or less, 5.0% or more and 12.5% or less, or 6.0% or more and 12.5% or less. In this respect, "total thickness of the barrier layer" shall refer to the total thickness of all barrier layers in the oriented polyethylene film. In any case, it is preferred that the oriented polyethylene film contains exactly one barrier layer. In an embodiment, the total thickness of the barrier layer may be 0.5 µm or more and 10.0 µm or less, preferably 0.8 µm or more and 8.0 µm or less, 1.0 µm or more and 6.0 µm or less, 1.2 µm or more and 5.0 µm or less, 1.4 µm or more and 4.0 µm or less, or 1.5 µm or more and 3.5 µm or less.

An ethylene content in the EVOH of the barrier layer may be 10 mol% or more and 50 mol% or less, preferably 15 mol% or more and 45 mol% or less, 20 mol% or more and 40 mol% or less, or 25 mol% or more and 35 mol% or less.

An Oxygen Transmission Rate (OTR) as measured on a film formed from the EVOH and having a thickness of 20 µm in accordance with ISO 21309-2 Annex C at 20°C and 65%RH, may be 0.03 cm³/m²/day/atm or more and 0.95 cm³/m²/day/atm or less, preferably 0.05 cm³/m²/day/atm or more and 0.80 cm³/m²/day/atm or less, 0.10 cm³/m²/day/atm or more and 0.70 cm³/m²/day/atm or less, or 0.15 cm³/m²/day/atm or more and 0.60 cm³/m²/day/atm or less.

A Young modulus of the EVOH, as measured according to ISO 527, may be 1.2 GPa or more and 7.0 GPa or less, preferably 1.5 GPa or more and 6.5 GPa or less, 2.5 GPa or more and 6.0 GPa or less, or 3.5 GPa or more and 6.0 GPa or less.

A melting point (Tm) of the EVOH, as determined according to ISO 11357, may be 150°C or more and 210°C or less, preferably 155°C or more and 200°C or less, 160°C or more and 195°C or less, or 165°C or more and 190°C or less.

A crystallisation temperature (Tc) of the EVOH, as determined according to ISO 11357, may be 140°C or more and 195°C or less, preferably 145°C or more and 185°C or less, 150°C or more and 175°C or less, or 152°C or more and 168°C or less.

A MFR2 of the EVOH, as determined according to ISO 1133 at 190°C at a load of 2.16 kg, may be 0.2 g/10 min or more and 4.0 g/10 min or less, preferably 0.4 g/10 min or more and 3.5 g/10 min or less, 0.6 g/10 min or more and 3.2 g/10 min or less, 0.8 g/10 min or more and 2.9 g/10 min or less, 1.0 g/10 min or more and 2.6 g/10 min or less, or 1.1 g/10 min or more and 2.4 g/10 min or less.

### Other layers (D)

The multilayer film of the invention may also contain further layers (also referred to as other layers or outer layers) outside the skin layer(s). Preferably, such outer layer(s) may act as sealing layer to allow the multilayer film to seal to itself or to another substrate.

Further layer(s) D can be formed by co-extruding simultaneously with the ABC-film structure. Alternatively, further layer(s) can be applied to the primary or secondary ABC-film structure, i.e. before or after orientation, by lamination or other suitable methods. It is envisaged in the present invention that lamination of the oriented barrier films can be done either to itself or to any further substrate. So e.g. an oriented film can be laminated onto a further oriented film.

The skilled person is aware of suitable polymers and/or structures used for lamination. In case the outer layer D is applied by lamination, symmetric and asymmetric film structures are equally preferred.

Any outer layer present preferably comprises, such as consists essentially of, a polyethylene so as to improve recyclability. The polymer which is part of an outer layer is again preferably a polyethylene-based polymer in which ethylene forms the major component. Preferred components of the outer layer include LDPE, LLDPE and HDPE polymers and mixtures thereof.

In an embodiment, the outer layer comprises more than one polyethylene. For example, the outer layer (D) comprises at least an LLDPE, especially a mixture of an LLDPE and an LDPE. Any LLDPE and/or LDPE present can be multimodal or unimodal. A polyethylene and/or LLDPE present in the outer layer can be made using single site or Ziegler Natta catalysis. When the outer layer is a sealing layer, polyethylene grades produced via single site catalysis are preferred.

LLDPE may be present in a major amount, i.e. greater than 50% (50-100 wt.-%) of the polymer composition of the outer layer. In this case, an LDPE may be present in a minor amount, i.e. 0-50% of the polymer component of the outer layer.

Preferably, an LLDPE is present in an amount of from 75-99 wt.-% of the outer layer, especially 85-95 wt.-%, e.g. around 90 wt.-%. LDPE is preferably present in an amount of from 1-25 wt.-% of the outer layer, especially from 1-20% or 5-15 wt.-%, e.g. about 10 wt.-%. In an especially preferred embodiment, the outer layer comprises LLDPE and LDPE, such as around 75 to 95 wt.-% of a LLDPE and around 5 to 25 wt.-% of LDPE.

The thickness of the outer layer(s) will typically be determined by the desired physical properties of the film, e.g. tear resistance or heat-seal properties.

However, the thickness of the outer layers (the summed thickness when multiple outer layers are present) will usually form at most 20% (have a thickness of 20% or less) of the total thickness of the multilayer film, such as 0% or more and 15% or less, 2% or more and 13% or less, or 3% or more and 10% or less. Preferably, such outer layers form about 5% (about means 10% variation, in this case from 4.5% to 5.5%) of the total film thickness.

It is understood within this application that the oriented barrier films may contain stabilisers, processing aids, pigments or other additives as known and commonly used in the art. This is also or especially valid in conjunction with expressions and formulations using the wording "consisting of" or "consisting essentially of". Additives in the present application may for example be stabilisers, processing aids, pigments, fillers and reinforcing agents.

### Packaging

The present invention furthermore relates to a packaging comprising the oriented polyethylene film of the present invention (as described above). The packaging may be a packaging for food or beverages, preferably for food. In particular when the oriented polyethylene film is a transparent film, the packaging can provide a clearly visible image of the packed goods while maintaining excellent gas barrier properties. The oriented polyethylene film may be heat sealed (or bonded) to another part of the packaging, e.g. to a more rigid part of the packaging.

The oriented polyethylene film may also be used as a substitute for polyethylene terephthalate (PET), e.g. for packaging beverages as the main packaging material (e.g. for forming a body of a bottle). In a further alternative, the oriented polyethylene film may be bonded to a non-polymer material, such as cardboard and/or metal foil (e.g. aluminium foil) to provide a bonded material (composite material). The bonding may be achieved via a tie layer of the oriented polyethylene film or via a skin layer of the oriented polyethylene film, with or without an additional bonding layer.

### Production method

The present invention relates to a production method for multilayer oriented film as defined above.

The oriented multilayer barrier film of the present invention can be produced by orienting (stretching) a non-oriented (primary) multilayer film by a certain stretch ratio to achieve the final thickness of the oriented multilayer film. The primary film can be produced by any conventional film forming method, and can, for example, be a blown film or a cast film. It is preferred that the primary film is a blown film.

The method of the present invention preferably comprises stretching a primary multilayer film (to provide the oriented multilayer film). The stretching is preferably monoaxial stretching, even more preferably monoaxial stretching in machine direction. When the primary film is monoaxially stretched (to provide the oriented multilayer film), the stretch ratio is preferably 3.0 or more and 9.0 or less, more preferably 3.5 or more and 7.5 or less, 3.9 or more and 6.5 or less, or 4.3 or more and 5.9 or less.

The thickness of the primary film is preferably in the range of 75 to 250 µm, such as 100 to 200 µm or 125 to 175 µm.

The thickness of the primary film and the stretch ratio are preferably adjusted such that the thickness of the oriented polyethylene film is 10 µm or more and 35 µm or less, preferably 11 µm or more and 30 µm or less, 12 µm or more and 28 µm or less, 13 µm or more and 26 µm or less, or 15 µm or more and 25 µm or less.

The stretching is preferably carried out at a temperature in the range of from 25°C to 2°C below the melting point (ISO 11357) of the HPDE in the skin layer, more preferably in the range of from 15°C to 3°C below the melting point of the HPDE in the skin layer, in the range of from 12°C to 4°C below the melting point of the HPDE in the skin layer, or in the range of from 10°C to 5°C below the melting point of the HPDE in the skin layer. A typical (and preferred) temperature for stretching (a temperature at which stretching is carried out) is in the range of 100°C or more and 128°C or less, preferably 108°C or more and 127°C or less, 112°C or more and 126°C or less, 114°C or more and 125°C or less, or even 117°C or more and 125°C or less.

Stretching may be carried out by any conventional technique using any conventional stretching devices which are well known to those skilled in the art. Preferably, the film is stretched only in the MD. The effect of stretching in only one direction results in a mono-axially oriented film.

The barrier layer, the tie layer and the skin layer are preferably laminated to each other, more preferably by co-extrusion. Preferably all layers of the oriented polyethylene film are laminated to each other, more preferably by co-extrusion. Particularly preferably, the barrier layer is laminated to be adjacent (directly laminated) to the tie layer and the tie layer is laminated to be adjacent to both the barrier layer and the skin layer.

### Examples

The present invention will be described in further detail by way of Examples. While it is not intended that the invention is limited to the Examples, it is to be understood that the Examples provide preferred embodiments of the invention and that any numerical value and/or specific constituent material may be freely combined with the general disclosure presented above to provide preferred (general) embodiments of the present invention.

### Measurements methods

The following measurement methods were used in the Examples of the present invention and can be applied to the present invention as a whole.

### Melt flow rate (MFR)

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR2 of polyethylene was measured at a temperature of 190°C and a load of 2.16 kg and the MFR21 of polyethylene was measured at a temperature of 190°C and a load of 21.6 kg. The quantity FRR (flow rate ratio) denotes the ratio of flow rates at different loads. Thus, FRR (21/2) denotes the value of MFR21/MFR2.

### Density

Density of the polymer was measured according to ISO 1183-1:2004 Method A on compression moulded specimen prepared according to EN ISO 1872-2 (Feb 2007) and is given in kg/m³.

### DSC analysis, melting temperature (Tm), crystallization temperature (Tc) and melt enthalpy (Hm)

Melting temperature (Tm), crystallization temperature (Tc) and melt enthalpy (Hm) are measured with a TA Instrument Q2000 differential scanning calorimetry (DSC) on 5 to 7 mg samples. DSC is run according to ISO 11357 / part 3 /method C2 in a heat / cool / heat cycle with a scan rate of 10°C/min in the temperature range of 0 to +200°C. The crystallization temperature (Tc) was determined from the cooling step, while melting temperature (Tm) and melting enthalpy (Hm) were determined from the second heating step.

### Viscosity of PVA

The viscosity of PVA was measured of with a 4% aqueous solution at 20°C DIN 53015 / JIS K 6726

### Oxygen transmittance rate (OTR)

OTR of an oriented multilayer film was measured according to ISO 15105-1 at temperature of 23°C, relative humidity of 0%. The film is produced according to method below.

### Synthesis Example 1 (HOPE synthesis)

A bimodal high density polyethylene (MFR2: 0.8 g/10min; density: 956 kg/m³; melting point: 131°C; FRR: 59) was produced in a pilot plant with a ZN catalyst (as disclosed in EP 2 994 506 A1) with a series of pre-polymerisation - loop - gas phase reactor (conditions shown in Table A below), then pelletized with 500 ppm Irganox 1010 (supplied by BASF), 2000 ppm Irgafos 168 (supplied by BASF), 500 ppm calcium stearat (CEASIT FI, supplied by Baerlocher) on a twin screw extruder.

**Table A:**

| **Prepolymerisation** | | |
|---|---|---|
| Temperature (°C) | | 70 |
| Pressure (bar) | | 57 |
| H2 feed (g/h) | | 5.0 |

| **Loop reactor** | | |
|---|---|---|
| Temperature (°C) | | 95 |
| Pressure (bar) | | 55 |
| C2 concentration (mol%) | | 3.5 |
| H2/C2 ratio (mol/kmol) | | 430 |
| Density (kg/m³) | | 970 |
| split % | | 49 |
| MFR2 (g/10 min) | | 350 |

| **GPR** | | |
|---|---|---|
| Temperature (°C) | | 85 |
| Pressure (bar) | | 20 |
| H2/C2 ratio (mol/kmol) | | 110 |
| C4/C2 ratio (mol/kmol) | | 25.0 |
| split % | | 51 |
| Density (kg/m³) after GPR (measured) | | 956 |
| MFR2 (g/10 min) after GPR (measured) | | 0.8 |
| FRR after GPR (measured) | | 59 |
| Density (kg/m³) in GPR (calculated) | | 942 |
| MFR2 (g/10 min) in GPR (calculated) | | 0.002 |

### Inventive Example 1

A non-oriented multilayer film (primary film) was produced by co-extruding the raw materials in a 7-layer co-extrusion apparatus (Alpine 7 layer blown film) as shown in Table 1 below at a layer thickness of 150 µm, with BUR (blow-up ratio) of 1:2.5, total production rate of 180 kg/h. All of the extruders are run at 201°C. The primary film was forwarded to stretching in the machine direction at a ratio of 5.3 (times) on a MDO unit (Alpine MDO 20) at a stretch temperature of 124°C to provide a 28 µm oriented multilayer film.

**Table 1:**

| | IE1-Material | CE1-Material | CE2-Material | Relative layer thickness |
|---|---|---|---|---|
| Layer 1 (skin) | HDPE | HDPE | HDPE | 19% |
| Layer 2 (skin) | HDPE | HDPE | HDPE | 18% |
| Layer 3 (tie) | modified LLDPE | modified LLDPE | modified LLDPE | 8% |
| Layer 4 (barrier) | EVOH/PVA1 | EVOH | EVOH/PVA2 | 10% |
| Layer 5 (tie) | modified LLDPE | modified LLDPE | modified LLDPE | 8% |
| Layer 6 (skin) | HDPE | HDPE | HDPE | 18% |
| Layer 7 (skin) | HDPE | HDPE | HDPE | 19% |

The apparatus allows a maximum of 20% of the total thickness per layer so that the skin layers were produced using two sub-layers each.

The following materials were used:

| | |
|---|---|
| HDPE: | Bimodal high density polyethylene (MFR2: 0.8 g/10min; density: 956 kg/m³; melting point: 131°C; FRR: 59) of Synthesis Example 1. |
| modified LLDPE: | Bondyram^{®} TL4808 (product of Polyram Group; maleic anhydride modified linear low density polyethylene; MFR2 (190°C): 3 g/10 min, density 917 kg/m³; melting point 122°C). |
| EVOH/PVA: | a blend of 70 wt.-% EVOH and 30 wt.-% PVA (PVA1 or PVA2) produced by melt blending in a pilot scale compounding line at 200°C and a production rate of 100 kg/h |
| EVOH: | EVAL^{™} F171B (product of Kuraray; ethylene content 32 mol%, MFR2 (190°C): 1.6 g/10min; density: 1190 kg/m³; melting point: 183°C; crystallisation temperature: 158°C; Young's modulus: 4.5 GPa; OTR (ISO 21309-2 Annex C, 20°C, 65%RH, 20 µm film): 0.3 cm³/m²/day/atma) |
| PVA1: | POVAL 4-98 (product of Kuraray; saponification degree: 98.0-98.8 mol%, viscosity 4.0 - 5.0 mPa·s) |
| PVA2: | POVAL 4-88 (product of Kuraray; saponification degree: 86.7-88.7 mol%, viscosity 3.5 - 4.5 mPa·s) |

The properties of the EVOH/PVA blend and of the resulting oriented film are shown in Table 2 below.

### Comparative Example 1

A film of Comparative Example 1 (CE1) was produced in the same manner as in the case of Inventive Example 1 except for employing the EVOH of Inventive Example 1 instead of the EVOH/PVA blend.

### Comparative Example 2

A film of Comparative Example 2 (CE2) was produced in the same manner as in the case of Inventive Example 1 (IE1) except for employing PVA2 in the EVOH/PVA blend, as shown in Table 1.

The properties of the EVOH/PVA blend and of the resulting oriented film are shown in Table 2 below.

The properties of the EVOH and of the resulting oriented film are shown in Table 2 below.

**Table 2:**

| | | CE1 | CE2 | IE1 |
|---|---|---|---|---|
| EVOH/PVA (EVOH) properties | | | | |
| MFR2 | g/10min | n.m. | 0.86 | 0.1 |
| Tc | °C | 156 | 111 | 145 |
| Tm | °C | 181 | 149 | 169 |
| Hm | J/g | 103 | 57 | 90 |

| Multilayer film oxygen barrier property | | | | |
|---|---|---|---|---|
| OTR | cm³/m²/day/atm | 1.0 | 1.4 | 0.5 |

| | | | | |
|---|---|---|---|---|
| * n.m.: not measured | | | | |

As can be seen from the Examples, the combination of a specific EVOH/PVA blend with a skin and tie layer as defined in the present invention provides superior oxygen barrier properties even with a thin barrier layer. The present invention thus contributes to easier recycling and more efficient use of resources.

## Claims

1. An oriented polyethylene film comprising at least three layers:
A) a skin layer comprising a High-Density Polyethylene (HDPE), wherein the HDPE has the following properties:
a density, as determined according to ISO 1183-1, of 940 kg/m³ or more and 970 kg/m³ or less,
a MFR2, as determined according to ISO 1133 at 190°C at a load of 2.16 kg, of 0.1 g/10 min or more and 2.0 g/10 min or less, and
a flow rate ratio (FRR) MFR21/MFR2 of 40 or more and 120 or less, the MFR21 being as determined according to ISO 1133 at 190°C and a load of 21.6 kg,
B) a tie layer comprising a polar-modified polyolefin, and
C) a barrier layer comprising a blend of an Ethylene - Vinyl alcohol Copolymer (EVOH) and a polyvinyl alcohol (PVA), wherein the PVA has a saponification degree of 90.0% or more and 100.0% or less, and the PVA content in the barrier layer is 5 wt.-% or more and 45 wt.-% or less.

2. The oriented polyethylene film according to claim 1, wherein the HDPE has at least one, more preferably multiple, most preferably all, of the following properties i) to v):
i) a density of 943 kg/m³ or more and 967 kg/m³ or less, preferably 946 kg/m³ or more and 964 kg/m³ or less, 949 kg/m³ or more and 961 kg/m³ or less, or 951 kg/m³ or more and 960 kg/m³ or less;
ii) a MFR2 of 0.2 g/10 min or more and 1.8 g/10 min or less, preferably 0.3 g/10 min or more and 1.6 g/10 min or less, 0.4 g/10 min or more and 1.5 g/10 min or less, 0.5 g/10 min or more and 1.4 g/10 min or less, or 0.55 g/10 min or more and 1.3 g/10 min or less;
iii) a melt flow ratio (FRR = MFR21/MFR2) of 40 or more and 115 or less, preferably 40 or more and 85 or less, 40 or more and 75 or less, 45 or more and 70 or less, or 50 or more and 65 or less;
iv) the HDPE is a multimodal HDPE containing at least a first component and a second component, wherein the first component has a higher MFR2 than the second component, and the multimodal HDPE being preferably an in-reactor blend of at least the first and second component;
v) the HDPE is contained in the skin layer in an amount of 70 wt.-% or more and 100 wt.-% or less, more preferably 80 wt.-% or more and 100 wt.-% or less, 90 wt.-% or more and 100 wt.-% or less, or 95 wt.-% or more and 100 wt.-% or less, relative to the total weight of the skin layer.

3. The oriented polyethylene film according to any one of the preceding claims, wherein the PVA has one or both of the following properties:
i) a saponification degree of 90.5% or more and 100.0% or less, preferably 91.0% or more and 99.9% or less, 92.0% or more and 99.8% or less, 93.0% or more and 99.7% or less, 94.0% or more and 99.6% or less, 95.5% or more and 99.5% or less, or 97.0% or more and 99.4% or less;
ii) a viscosity, as determined according to JIS K 6726, of 2.0 mPa·s or more and 130.0 mPa·s or less, preferably 2.5 mPa·s or more and 100.0 mPa·s or less, 3.0 mPa·s or more and 60.0 mPa·s or less, 3.5 mPa·s or more and 40.0 mPa·s or less, or 4.0 mPa·s or more and 35.0 mPa·s or less.

4. The oriented polyethylene film according to any one of the preceding claims, wherein the PVA content in the barrier layer is 8.0 wt.-% or more and 45.0 wt.-% or less, preferably 10.0 wt.-% or more and 42.0 wt.-% or less, 15.0 wt.-% or more and 40.0 wt.-% or less, 20.0 wt.-% or more and 38.0 wt.-% or less, or 25.0 wt.-% or more and 36.0 wt.-% or less.

5. The oriented polyethylene film according to any one of the preceding claims, wherein the sum of the content of the EVOH and of the PVA in the barrier layer is 90.0 wt.-% or more and 100 wt.-% or less, preferably 92.0 wt.-% or more and 100 wt.-% or less, 93.0 wt.-% or more and 100.0 wt.-% or less, 94.0 wt.-% or more and 100 wt.-% or less, 95.0 wt.-% or more and 100 wt.-% or less, 96.0 wt.-% or more and 100 wt.-% or less, 97.0 wt.-% or more and 100 wt.-% or less, 98.0 wt.-% or more and 100 wt.-% or less, 98.5 wt.-% or more and 100 wt.-% or less, 99.0 wt.-% or more and 100 wt.-% or less, or 99.5 wt.-% or more and 100 wt.-% or less, and more preferably the barrier layer consists of EVOH, PVA and optional additives.

6. The oriented polyethylene film according to any one of the preceding claims, wherein the total thickness of the barrier layer is 1.0% or more and 15.0% or less of the total thickness of the oriented polyethylene film, preferably 2.0% or more and 14.0% or less, 3.0% or more and 13.5% or less, 4.0% or more and 13.0% or less, 5.0% or more and 12.5% or less, or 6.0% or more and 12.5% or less.

7. The oriented polyethylene film according to any one of the preceding claims, wherein the oriented polyethylene film is a stretched film, preferably a monoaxially stretched film, more preferably monoaxially stretched in machine direction, and wherein, when the film is a monoaxially stretched film, the stretch ratio is preferably 3.0 or more and 9.0 or less, more preferably 3.5 or more and 7.5 or less, 3.9 or more and 6.5 or less, or 4.3 or more and 5.9 or less.

8. The oriented polyethylene film according to any one of the preceding claims, wherein the EVOH has at least one, more preferably multiple, most preferably all, of the following properties:
i) an ethylene content in the EVOH in the barrier layer of 10 mol% or more and 50 mol% or less, preferably 15 mol% or more and 45 mol% or less, 20 mol% or more and 40 mol% or less, or 25 mol% or more and 35 mol% or less;
ii) an Oxygen Transmission Rate (OTR) as measured on a film made of the EVOH and having a thickness of 20 µm, measured in accordance with ISO 21309-2 Annex C at 20°C and 65%RH, of 0.03 cm³/m²/day/atm or more and 0.95 cm³/m²/day/atm or less, preferably 0.05 cm³/m²/day/atm or more and 0.80 cm³/m²/day/atm or less, 0.10 cm³/m²/day/atm or more and 0.70 cm³/m²/day/atm or less, or 0.15 cm³/m²/day/atm or more and 0.60 cm³/m²/day/atm or less;
iii) a Young modulus, as measured according to ISO 527, of 1.2 GPa or more and 7.0 GPa or less, preferably 1.5 GPa or more and 6.5 GPa or less, 2.5 GPa or more and 6.0 GPa or less, or 3.5 GPa or more and 6.0 GPa or less;
iv) a melting point (Tm), as determined according to ISO 11357, of 150°C or more and 210°C or less, preferably 155°C or more and 200°C or less, 160°C or more and 195°C or less, or 165°C or more and 190°C or less;
v) a crystallisation temperature (Tc), as determined according to ISO 11357, of 140°C or more and 195°C or less, preferably 145°C or more and 185°C or less, 150°C or more and 175°C or less, or 152°C or more and 168°C or less;
vi) a MFR2, as determined according to ISO 1133 at 190°C at a load of 2.16 kg, of 0.2 g/10 min or more and 4.0 g/10 min or less, preferably 0.4 g/10 min or more and 3.5 g/10 min or less, 0.6 g/10 min or more and 3.2 g/10 min or less, 0.8 g/10 min or more and 2.9 g/10 min or less, 1.0 g/10 min or more and 2.6 g/10 min or less, or 1.1 g/10 min or more and 2.4 g/10 min or less.

9. The oriented polyethylene film according to any one of the preceding claims, wherein the total thickness of the oriented polyethylene film is 10 µm or more and 35 µm or less, preferably 11 µm or more and 30 µm or less, 12 µm or more and 28 µm or less, 13 µm or more and 26 µm or less, or 15 µm or more and 25 µm or less.

10. The oriented polyethylene film according to any one of the preceding claims, wherein the oriented polyethylene film has at least one, more preferably multiple, most preferably all, of the following properties:
i) an Oxygen Transmission Rate (OTR) as measured on an oriented polyethylene film having a thickness of 25 µm in accordance with ISO15105-1 and 23°C and 0% RH, of less than 1.00 cm³/m²/day/atm, preferably 0.03 cm³/m²/day/atm or more and 0.95 cm³/m²/day/atm or less, 0.05 cm³/m²/day/atm or more and 0.90 cm³/m²/day/atm or less, 0.07 cm³/m²/day/atm or more and 0.85 cm³/m²/day/atm or less, 0.09 cm³/m²/day/atm or more and 0.80 cm³/m²/day/atm or less, or 0.10 cm³/m²/day/atm or more and 0.70 cm³/m²/day/atm or less;
ii) the oriented polyethylene film comprises the barrier layer, at least one tie layer on each of the opposing sides of the barrier layer, and at least two skin layers;
iii) the oriented polyethylene film is a transparent film;
iv) the oriented polyethylene film contains polyethylene in an amount of 40.0 wt.-% or more and 98.0 wt.-% or less, more preferably 50.0 wt.-% or more and 96.0 wt.-% or less, 60.0 wt.-% or more and 94.0 wt.-% or less, 65.0 wt.-% or more and 92.0 wt.-% or less, or 70.0 wt.-% or more and 90.0 wt.-% or less, relative to the total weight of the oriented polyethylene film.

11. The oriented polyethylene film according to any one of the preceding claims, wherein the blend of the barrier layer has at least one, more preferably multiple, most preferably all, of the following properties:
i) a melting point (Tm), as determined according to ISO 11357, of 145°C or more and 185°C or less, preferably 150°C or more and 180°C or less, 155°C or more and 175°C or less, or 160°C or more and 170°C or less;
ii) a crystallisation temperature (Tc), as determined according to ISO 11357, of 115°C or more and 165°C or less, preferably 120°C or more and 160°C or less, 125°C or more and 158°C or less, or 130°C or more and 154°C or less;
iii) a MFR2, as determined according to ISO 1133 at 190°C at a load of 2.16 kg, of 0.02 g/10 min or more and 1.5 g/10 min or less, preferably 0.03 g/10 min or more and 1.3 g/10 min or less, 0.04 g/10 min or more and 1.1 g/10 min or less, 0.05 g/10 min or more and 0.9 g/10 min or less, or 0.06 g/10 min or more and 0.7 g/10 min or less.

12. The oriented polyethylene film according to any one of the preceding claims, wherein the polar-modified polyolefin has at least one, more preferably multiple, most preferably all, of the following properties:
i) a melting point, as determined according to ISO 11357, of 100°C or more and 145°C or less, preferably 105°C or more and 140°C or less, 110°C or more and 135°C or less, or 115°C or more and 130°C or less;
ii) a density, as determined according to ISO 1183-1, of 870 kg/m³ or more and 970 kg/m³ or less, preferably 890 kg/m³ or more and 960 kg/m³ or less, 900 kg/m³ or more and 955 kg/m³ or less, 910 kg/m³ or more and 950 kg/m³ or less, 912 kg/m³or more and 945 kg/m³ or less, 914 kg/m³ or more and 940 kg/m³ or less, or of 916 kg/m³ or more and 930 kg/m³ or less;
iii) the polar-modified polyolefin is at least one selected from the group consisting of an acid-modified polyolefin and an anhydride-modified polyolefin, preferably at least one selected from the group consisting of maleic anhydride graft modified polyethylene, maleic anhydride graft modified polypropylene, maleic anhydride graft modified ethylene-ethyl acrylate copolymer, maleic anhydride graft modified ethylene-vinyl acetate copolymer, more preferably at least a maleic anhydride modified polyethylene.
iv) a MRF₂, as determined according to ISO 1133 at 190°C at a load of 2.16 kg, of 0.5 g/10 min or more and 4.0 g/10 min or less, preferably 0.8 g/10 min or more and 3.8 g/10 min or less, 1.1 g/10 min or more and 3.6 g/10 min or less, 1.4 g/10 min or more and 3.4 g/10 min or less, or of 1.6 g/10 min or more and 3.2 g/10 min or less.

13. The oriented polyethylene film according to any one of the preceding claims, wherein the barrier layer, the tie layer and the skin layer are laminated to each other, preferably by co-extrusion, and preferably all layers of the oriented polyethylene film are laminated to each other, more preferably by co-extrusion.

14. A packaging, preferably for food or beverages, more preferably for food, the packaging comprising the oriented polyethylene film according to any one of the preceding claims, wherein the oriented polyethylene film is preferably a transparent film, and/or the oriented polyethylene film is preferably heat-sealed to another part of the packaging.

15. A method for producing an oriented polyethylene film according to any one of claims 1 to 13, the method comprising laminating, preferably by co-extrusion, at least the skin layer, the tie layer and the barrier layer.
